# EUROPÄISCHE PATENTSCHRIFT

(11) **EP 0 930 687 B1**
(45) Veröffentlichungstag und Bekanntmachung des Hinweises auf die Patenterteilung: **03.01.2007**
(21) Anmeldenummer: 99100268.4
(22) Anmeldetag: 08.01.1999
(51) Int. Cl.: H02G 15/04, H02G 3/06

(54) **Kabelverschraubung**
Cable gland
Presse-étoupe pour câble

(30) Priorität: 14.01.1998 DE 19801145
(43) Veröffentlichungstag der Anmeldung: 21.07.1999
(73) Patentinhaber: U.I. Lapp GmbH, 70565 Stuttgart (DE)
(72) Erfinder: Drotleff, Rolf, 71263 Weil-der-Stadt (DE)
(74) Vertreter: Hoeger, Stellrecht & Partner Patentanwälte

(56) Entgegenhaltungen:
- EP-A- 0 803 953
- EP-A- 0 871 254
- DE-U- 29 611 451
- GB-A- 2 214 728
- GB-A- 2 312 339
- US-A- 4 328 392

## Beschreibung

Die Erfindung betrifft eine Kabelverschraubung umfassend einen mit einem auf einem definierten elektrischen Potential liegenden Bauteil, insbesondere einem Gehäuse, verbundenen Stutzen, eine in ein Inneres des Stutzens eingesetzte. Dichtung sowie ein mit dem Stutzen verschraubt Druckelement, welches auf die Dichtung im Sinne eines Anlegens derselben an einen Mantel eines durch die Kabelverschraubung hindurchgeführten Kabels wirkt.

Eine derartige kabelverschraubung ist aus EP-A-0 803 bekannt.

Weitere Kabelverschraubungen sind aus dem Stand der Technik bekannt. Bei diesen Kabelverschraubungen soll das Kabel dicht abgeschlossen mit dem Bauteil, in welches der Stutzen einschraubbar ist, verbunden werden.

Derartige Kabelverschraubungen werden vielfach unter ungünstigen Umgebungsbedingungen eingesetzt, welche eine Abdichtung zwischen dem Kabel und der Kabelverschraubung erforderlich machen.

Bei derartigen Einsatzfällen besteht das Problem, daß die Kabelverschraubung und das Kabel optimal gegen Umgebungseinflüsse geschützt werden sollten.

Die Aufgabe der Erfindung besteht daher darin, eine Kabelverschraubung und eine Kabelanordnung zu schaffen, die einen optimalen und möglichst geschützten Einbau eines Kabels ermöglicht.

Diese Aufgabe wird bei einer Kabelverschraubung der eingangs beschriebenen Art erfindungsgemäß dadurch gelöst, daß auf einer dem Stutzen gegenüberliegenden Seite des Druckelements eine Aufnahme vorgesehen ist, in welche ein Ende eines den Mantel des Kabels umgebenden und über seine Länge elektrisch leitend ausgebildeten Kabelschutzschlauchs eingesetzt ist, daß ein mit dem Druckelement verbundenes Klemmelement vorgesehen ist, mit welchem das Ende des Kabelschutzschlauchs mechanisch und elektrisch leitend mit dem Druckelement verbunden ist und daß das Druckelement mit dem Stutzen und der Stutzen mit dem Bauteil elektrisch leitend verbunden sind.

Der Vorteil der erfindungsgemäßen Lösung ist darin zu sehen, daß einerseits der Kabelschutzschlauch einen mechanischen Schutz für das Kabel liefert und außerdem der Kabelschutzschlauch zusätzlich noch eine elektrische Abschirmung für das Kabel darstellt, wobei durch das elektrische Verbinden des Kabelschutzschlauchs letztlich mit dem Bauteil eine hervorragende und insbesondere lückenlose Abschirmung des Kabels auch im Bereich der Kabelverschraubung gewährleistet ist.

Gleichzeitig wirkt sich die Abdichtung zwischen dem Kabel und dem Stutzen insoweit vorteilhaft aus, als selbst bei in den Kabelschutzschlauch eindringendem Schmutz oder Wasser dieses nicht in das Bauteil, insbesondere das Gehäuse, gelangen kann und umgekehrt auch keine Verunreinigungen vom Gehäuse in den Kabelschutzschlauch eintreten können.

Darüber hinaus hat die erfindungsgemäße Lösung noch den großen Vorteil, daß sie einfach montierbar ist, da der Kabelschutzschlauch beispielsweise dann noch über das Kabel führbar ist, wenn dieses mit einem Ende angeschlossen und auch bereits in dem Stutzen mittels des Druckelements und der Dichtung fixiert ist.

Eine besonders günstige Lösung der erfindungsgemäßen Kabelverschraubung sieht vor, daß die Aufnahme als Aufnahme für eine Endtülle des Kabelschutzschlauchs ausgebildet ist. Das Vorsehen einer Endtülle des Kabelschutzschlauchs schafft die Möglichkeit, diesen einerseits mechanisch stabil und andererseits mit gutem elektrischem Kontakt am Druckelement zu fixieren. Dabei hat die Endtülle außerdem den großen Vorteil, daß diese fest auf dem Kabelschutzschlauch sitzt und somit insbesondere vorkonfektioniert bereits mit dem Kabelschutzschlauch geliefert werden kann.

Vorzugsweise ist dabei die Aufnahme so ausgebildet, daß sie eine sich in radialer Richtung zu einer Längsachse der Kabelverschraubung erstreckende Anlagefläche für ein Anlageelement der Endtülle aufweist.

Eine besonders günstige Ausbildung der Anlagefläche sieht dabei vor, daß die Anlagefläche sich in Richtung einer Einführöffnung der Aufnahme konisch erweitert. Eine derartige Anlagefläche hat den Vorteil, daß damit auch bei unterschiedlichen Toleranzen in einfacher Weise eine sichere und zuverlässige Fixierung des Anlageelements an der Aufnahme möglich ist.

Eine besonders sichere Fixierung des Anlageelements an der Anlagefläche ist insbesondere dann möglich, wenn das Anlageelement eine ebenfalls konisch geformte und der Anlagefläche zugewandten Oberfläche aufweist. Der Konuswinkel der Anlagefläche und der Konuswinkel der Oberfläche können dabei identisch sein.

Es ist aber auch vorteilhaft, wenn die Konuswinkel zwischen den beiden unterschiedlich sind, um ein näherungsweise linienförmiges Anliegen der beiden aneinander zu erzielen. Eine besonders günstige Lösung sieht vor, daß der Konuswinkel der Oberfläche des Anlageelements kleiner ist als der Konuswinkel der Anlagefläche, wobei vorteilhafterweise dieser Konuswinkel geringfügig kleiner ausgebildet ist als der der Anlagefläche.

Eine besonders günstige Lösung sieht vor, daß das Anlageelement durch einen mit seinen Ringflächen parallel zu einem Konus verlaufenden und an die Endtülle angeformten Ring gebildet ist.

Hinsichtlich der Ausbildung der elektrisch leitenden Verbindung zwischen dem Kabelschutzschlauch und dem Druckelement wurden bislang keine näheren Angaben gemacht. Beispielsweise wäre es möglich, ein separates elektrisches Verbindungselement zwischen dem Kabelschutzschlauch und dem Druckelement vorzusehen. Eine besonders günstige Lösung sieht vor, daß die elektrisch leitende Verbindung zwischen dem Kabelschutzschlauch und dem Druckelement über einen elektrischen Kontakt zwischen der Endtülle und dem Druckelement erfolgt, wobei die Endtülle elektrisch leitend mit dem in Längsrichtung des Kabelschutzschlauchs sich erstreckenden elektrisch leitenden Teil verbunden ist.

Die elektrisch leitende Verbindung kann dabei auf unterschiedlichste Art und Weise zustande kommen. Beispielsweise ist es denkbar, daß die Endtülle mit Kontaktfedern versehen ist, welche an der Aufnahme anliegen und einen ausreichend guten Kontakt zwischen der Endtülle und dem Druckelement vermitteln.

Eine besonders günstige Lösung sieht vor, daß die elektrische Verbindung zwischen der Endtülle und dem Druckelement über eine im wesentlichen linienförmige Anlage der beiden aneinander erfolgt. Das Vorsehen einer linienförmigen Anlage zur Herstellung der Verbindung zwischen den beiden hat den Vorteil, daß damit eine möglichst hohe Flächenpressung und somit ein möglichst guter elektrischer Kontakt zwischen diesen beiden mit möglichst geringem Kontaktwiderstand erzielbar ist.

Eine besonders günstige Lösung sieht vor, daß die Endtülle an einer Kante der Aufnahme anlegbar ist, da es besonders einfach ist, für die im wesentlichen linienförmige Anlage zwischen den beiden erforderliche Kante in die Aufnahme einzuformen oder an diese anzuformen, während das Vorsehen einer Kante im Bereich der Endtülle selbst mit mehr Aufwand verbunden ist.

Besonders günstig ist es hierbei, wenn die elektrisch leitende Verbindung zwischen der Endtülle und dem Druckelement über das an einer Kante auf einer Seite der Anlagefläche anliegende Anlageelement erfolgt.

Hinsichtlich des im Zusammenhang mit der erfindungsgemäßen Lösung vorgesehenen Klemmelements wurden keine näheren Angaben gemacht. So sieht ein vorteilhaftes Ausführungsbeispiel vor, daß das Klemmelement eine Überwurfmutter umfaßt, welche auf das Druckelement aufschraubbar ist, damit einer derartigen Überwurfmutter, in gleicher Weise wie beim Druckelement, einerseits große Kräfte zum Fixieren und Klemmen des Kabelschutzschlauchs und der Endtülle erreichbar sind und andererseits eine einfache Montage möglich ist.

Um mit einem derart ausgebildeten Klemmelement die Endtülle gut in der Aufnahme zu fixieren, ist vorzugsweise vorgesehen, daß das Klemmelement ein beispielsweise von der Überwurfmutter beaufschlagtes Druckteil umfaßt, welches auf das Anlageelement der Endtülle wirkt. Mit einem derartigen insbesondere als Druckring ausgebildeten Druckteil ist eine besonders sichere und dauerhafte Beaufschlagung des Anlageelements in Richtung der Anlagefläche gewährleistet, da der Druckring über die gesamte Erstreckung des Anlageelements in Azimutalrichtung auf das Anlageelement wirkt.

Eine besonders vorteilhafte Lösung sieht dabei vor, daß das Druckteil elastisch ausgebildet ist, so daß sich dieses beispielsweise durch die Überwurfmutter vorspannen läßt, um ständig die Endtülle an dem Druckelement kraftbeaufschlagt in Anlage zu halten.

Eine besonders sichere Fixierung der Endtülle mit dem Anlageelement ist dann möglich, wenn das Druckteil mit einem Druckkeil zwischen einer Außenseite des Kabelschutzschlauchs und dem Anlageelement der Endtülle eingreift und somit eine im wesentlichen zentrierte Fixierung des Kabelschutzschlauchs mit der Endtülle an der erfindungsgemäßen Kabelverschraubung gewährleistet.

Bei den bislang beschriebenen Varianten der erfindungsgemäßen Lösung wird stets davon ausgegangen, daß eine Abschirmung über den Kabelschutzschlauch erfolgt. Dies ist in einer Vielzahl von Fällen ausreichend. In besonders ungünstigen Umgebungen ist jedoch vorgesehen, daß in dem Stutzen ein Schirmkontaktelement angeordnet ist, welches in elektrischem Kontakt mit dem Stutzen steht und mittels mindestens eines in Richtung des durchgeführten Kabels reichenden Kontaktbügels einen einen Innenleiterbereich des Kabels umschließenden, freigelegten Kabelschirm kontaktiert. Die Vorteile dieser Lösung gehen jedoch über die Vorteile einer bloßen doppelten Abschirmung des Kabels hinaus, da einerseits der Kabelschutzschlauch bereits eine Abschirmung liefert, die sich unmittelbar über das Druckelement um den Stutzen bis zu dem Bauteil oder Gehäuse fortsetzt und in dieser Abschirmung noch eine zusätzliche Abschirmung vorgesehen ist, welche einen in das Kabel integrierten Kabelschirm ausnützt, wobei diese beiden, bereits über die Kabelverschraubung direkt elektrisch miteinander in Verbindung stehenden Abschirmungen den Vorteil haben, daß sich in Längsrichtung des Kabelschutzschlauchs induzierte Ströme unmittelbar über den Kabelschirm kompensieren lassen und somit letztlich auf all die Leitungen, die innerhalb des Kabelschirms liegen, keinerlei Einfluß haben können. Das heißt, daß die über die Kabelverschraubung hergestellte elektrische Verbindung zwischen dem Kabelschutzschlauch und dem in dem Kabel integrierten Kabelschirm eine optimale Unterdrückung und Abschirmung gegenüber Einstreuungen liefert.

Eine besonders günstige Lösung sieht vor, daß der Kontaktbügel, vorzugsweise in einer ungefähr parallel zur Längsachse der Kabelverschraubung verlaufenden Ebene, federnd bewegbar ist, wobei durch dieses federnde Bewegen eine sichere Kontaktierung des Kabelschirms durch den Kabelbügel möglich ist.

Eine besonders günstige Lösung sieht dabei vor, daß das Schirmkontaktelement mehrere Kontaktbügel aufweist.

Um das Schirmkontaktelement günstig am Stutzen fixieren zu können, ist vorgesehen, daß das Schirmkdntaktelement ein Trägerteil aufweist, an welchem die Kontaktbügel gehalten sind.

Besonders günstig läßt sich das Schirmkontaktelement dann an dem Stutzen fixieren, wenn das Schirmkontaktelement in einer Aufnahme des Stutzens sitzt und damit in einfacher Art und Weise sicher am Stutzen gehalten werden kann.

Besonders günstig ist es dabei, wenn das Trägerteil relativ zum Stutzen fixiert angeordnet ist und somit im wesentlichen an dem Stutzen festgelegt ist.

Besonders günstig ist es hierbei, wenn das Trägerteil mit einer Außenfläche in Richtung der Längsachse der Kabelverschraubung in der Aufnahme geführt ist.

Ferner ist es vorteilhaft, wenn zum Fixieren des Schirmkontaktelements in der Aufnahme vorgesehen ist, daß dieses mittels Rastelementen in Richtung der Längsachse fixiert ist.

Eine besonders günstige Lösung sieht dabei vor, daß das Schirmkontaktelement mittels mindestens einer in eine Ausnehmung der Aufnahme eingreifenden Kralle in Richtung der Längsachse fixiert ist.

Um das Schirmkontaktelement einfach montieren zu können, ist vorteilhafterweise vorgesehen, daß das Schirmkontaktelement von einer dem Druckelement gegenüberliegenden Seite des Stutzens in die Aufnahme einschiebbar ist. Diese Seite ist üblicherweise die Gehäuseseite des Stutzens.

Vorzugsweise schließt sich dabei die Aufnahme an eine dem Druckelement gegenüberliegende Öffnung des Stutzens an, so daß das Schirmkontaktelement möglichst dicht bei dem Bauteil sitzt, in welches der Stutzen einschraubbar ist.

Die Erfindung betrifft jedoch nicht nur eine Kabelverschraubung, sondern auch eine Kabelanordnung, umfassend eine Kabelverschraubung und ein in dieser gehaltenes Kabel, wobei erfindungsgemäß die Kabelanordnung mit einem Kabelschutzschlauch versehen ist und außerdem entsprechend den vorstehend beschriebenen Ausführungsbeispielen ausgebildet ist. Der Vorteil dieser Lösung ist in der bereits vorstehend diskutierten Möglichkeit einer vorteilhaften Abschirmung des Kabels zu sehen.

Besonders günstig ist es hierbei, wenn der Kabelschutzschlauch in seiner Längsrichtung variabel, das heißt entweder elastisch dehnbar oder stauchbar ist, da damit eine Montage des Kabelschutzschlauchs selbst bei mit beiden Enden in die Kabelverschraubungen fixiertem Kabel möglich ist.

Hinsichtlich der leitfähigen Ausbildung des Kabelschutzschlauchs über seine Länge wurden bislang keine näheren Angaben gemacht. So sieht eine vorteilhafte Lösung vor, daß der Kabelschutzschlauch in dessen Längsrichtung leitfähiges Element aufweist, wobei diese Lösung voraussetzt, daß dieses Element auch direkt in der Längsrichtung leitfähig ist und somit parallel zu dieser Richtung fließende Ströme in diesem auftreten können. Diese Lösung ist die günstigste Lösung, da sie eine optimale Abschirmung gewährleistet.

Es ist jedoch aber auch aus vielerlei Gründen vorteilhaft, die Kabelanordnung so auszubilden, daß der Kabelschutzschlauch ein nur in einer Spiralrichtung elektrisch leitendes Element umfaßt, da ein derartiges elektrisch leitendes Element, insbesondere mit Längenvariabilität besonders einfach und günstig herstellbar ist und insbesondere in Verbindung mit einem ohnehin in dem Kabel vorgesehenen Kabelschirm eine ausreichende zusätzliche Schirmwirkung entfaltet.

Zum Fixieren des Kabelschutzschlauchs in der erfindungsgemäßen Kabelverschraubung ist vorzugsweise vorgesehen, daß der Kabelschutzschlauch mit einer Endtülle versehen ist.

Diese Endtülle kann in unterschiedlichster Art und Weise ausgebildet sein. Eine vorteilhafte Lösung sieht vor, daß die Endtülle einen Innenmantel für den Kabelschutzschlauch aufweist und somit mit diesem im Inneren des Kabelschutzschlauchs an diesem anliegt.

Vorzugsweise ist die Endtülle mit dem Innenmantel an dem Kabelschutzschlauch fixiert. Dabei wäre es denkbar, die Endtülle mit dem Kabelschutzschlauch zu verkleben, zu verlöten oder über formschlüssige Elemente zu verbinden. Eine besonders günstige formschlüssige Verbindung sieht vor, daß die Endtülle über in Sicken des Kabelschutzschlauchs eingreifende eigene Sicken an diesem fixierbar ist.

Ferner ist vorteilhafterweise vorgesehen, daß die Endtülle einen Außenmantel für den Kabelschutzschlauch aufweist.

Zur Fixierung der Endtülle in der Aufnahme der erfindungsgemäßen Kabelverschraubung ist vorzugsweise vorgesehen, daß die Endtülle ein sich vom Kabelschutzschlauch aus nach außen erstreckendes Anlageelement aufweist, welches dann an die Anlagefläche der Aufnahme anlegbar ist.

Eine zweckmäßige Ausgestaltung eines derartigen Aufnahmeelements sieht vor, daß dieses als parallel zu einer Konusfläche verlaufender Ring ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine halbseitig geschnittene, halbseitig vollständig gezeichnete Seitenansicht eines ersten Ausführungsbeispiels einer erfindungsgemäßen Kabelanordnung mit Kabelverschraubung;

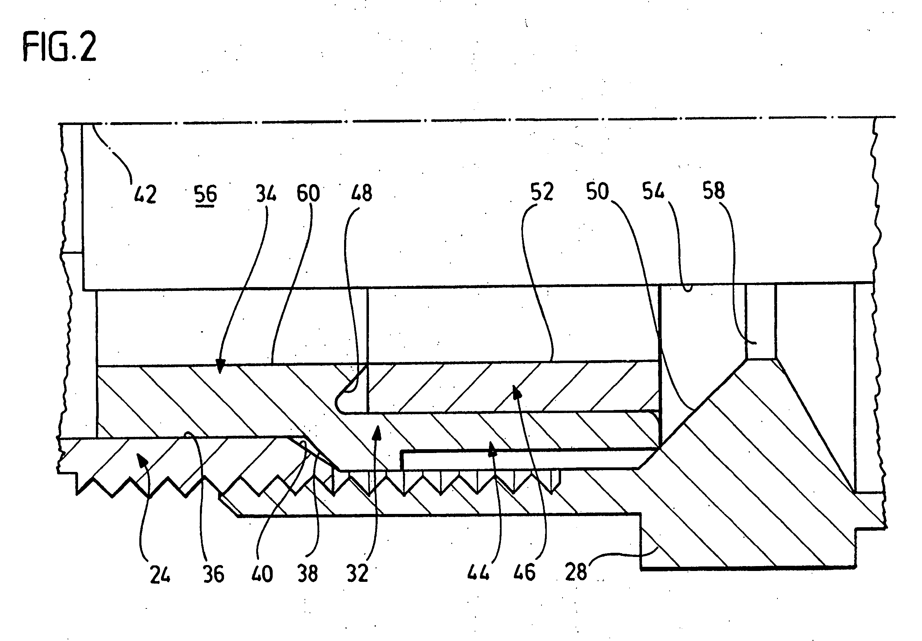

- Fig. 2: eine vergrößerte ausschnittsweise Darstellung eines Bereichs mit einem Dichtungsträger und einer Druckmutter;

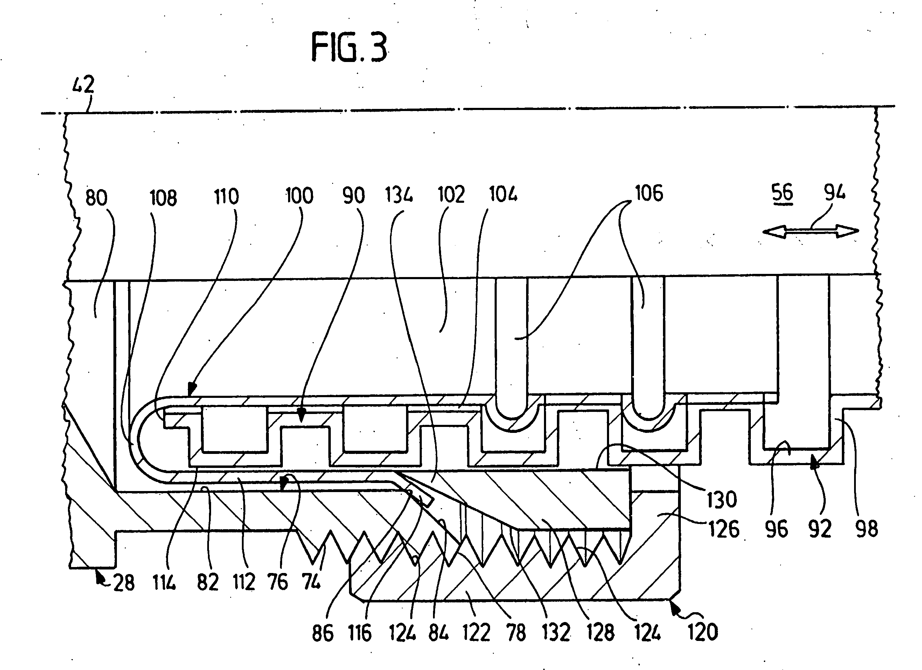

- Fig. 3: eine vergrößerte Darstellung eines Bereichs mit einer Aufnahme für ein Ende des Kabelschutzschlauchs;
- Fig. 4: eine Seitenansicht ähnlich Fig. 1 eines zweiten Ausführungsbeispiels;
- Fig. 5: eine Seitenansicht ähnliche Fig.1 eines dritten Ausführungsbeispiels und
- Fig. 6: eine Seitenansicht ähnlich Fig. 1 eines vierten Ausführungsbeispiels.

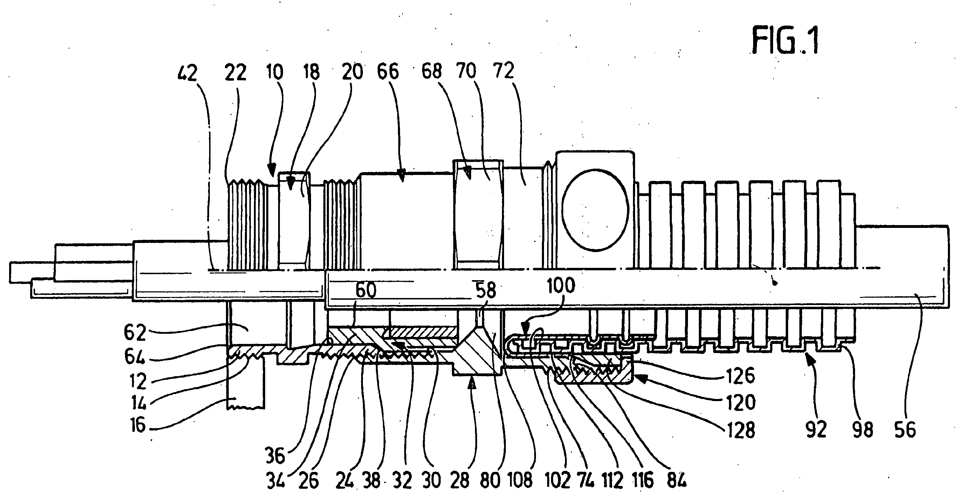

Ein erstes Ausführungsbeispiel einer erfindungsgemäßen Kabelverschraubung, dargestellt in Fig. 1, umfaßt einen als Ganzes mit 10 bezeichneten und elektrisch leitend ausgebildeten Stutzen, welcher einen zylindrischen Ansatz 12 mit einem Außengewinde 14 aufweist, das in ein auf einem definierten elektrischen Potential liegendes elektrisches Bauteil 16, vorzugsweise eine Wand eines Gehäuses einschraubbar ist.

Der Stutzen 10 umfaßt ferner einen Schlüsselflächenabschnitt 18, welcher mit Schlüsselflächen 20 versehen ist und auf einer einem gehäuseseitigen Ende 22 des zylindrischen Ansatzes 12 gegenüberliegenden Seite unmittelbar im Anschluß an den zylindrischen Ansatz 12 am Stutzen 10 angeordnet ist.

Auf einer dem zylindrischen Ansatz 12 gegenüberliegenden Seite des Schlüsselflächenabschnitts 18 des Stutzens 10 weist dieser einen Abschnitt 24 auf, welcher ein Außengewinde 26 trägt.

Auf das Außengewinde 26 ist eine als Ganzes mit 28 bezeichnete Druckmutter mit ihrem Innengewinde 30 aufschraubbar.

Der Abschnitt 24 dient zur Aufnahme eines als Ganzes mit 32 bezeichneten Dichtungsträgers, welcher mit einem Halteansatz 34 in den Abschnitt 24 eingreift und an einer inneren Zylinderfläche 36 desselben in Richtung einer Längsachse 42 geführt ist. Ferner stützt sich der Dichtungsträger 32 mit einer Flanschfläche 38 auf einer dem Schlüsselflächenabschnitt 18 abgewandten Flanschfläche 40 des Zylinderabschnitts 24 ab und ist dadurch in Richtung der Längsachse 42 der Kabelverschraubung gegen eine Verschiebung in Richtung des Schlüsselflächenabschnitts 18 gesichert.

Der Dichtungsträger 32 umfaßt ferner einen Lamellenkorb 44, der seinerseits eine ringförmig ausgebildete Dichtung 46 umschließt, wobei die Dichtung 46 ferner durch einen inneren Ansatz 48 des Dichtungsträgers 32 gegen eine Verschiebung in Richtung der Längsachse 42 zum Schlüsselflächenabschnitt 18 hin fixierbar ist.

Der Lamellenkorb 44 ist seinerseits durch eine radial nach innen zur Längsachse 42 hin verlaufende Schrägfläche 50 der Druckmutter 28 beaufschlagbar, welche bei zunehmendem Aufschrauben der Druckmutter 28 auf das Außengewinde 26 die Lamellen des Lamellenkorbs 44 zunehmend in Richtung der Längsachse 42 deformiert und damit die in dem Lamellenkorb 44 aufgenommene Dichtung 46 ebenfalls so weit in Richtung der Längsachse 42 bewegt, daß ein innerer Durchlaß 52 der Dichtung 46 an einer Kabelaußenmantelfläche 54 eines Kabels 56 dichtend mit Pressung anlegbar ist, um einerseits eine Abdichtung zwischen der Kabelverschraubung und dem Kabel 56 und andererseits eine Fixierung des Kabels 56 in Richtung der Längsachse 42 zu erhalten.

Das Kabel 56 verläuft dabei durch eine zur Längsachse 52 koaxiale Öffnung der Druckmutter 26, dann durch den Durchlaß 52 der Dichtung 46 hindurch und passiert dann einen inneren Durchbruch 60 des Dichtungsträgers 32. Im Anschluß an den Dichtungsträger 32 erstreckt sich das Kabel 56 durch einen Innenraum 62 des Stutzens 10, welcher sich ausgehend vom Zylinderabschnitt 24 durch den Schlüsselflächenabschnitt 18 und den zylindrischen Ansatz 12 bis zu einer gehäuseseitigen Öffnung 64 des Stutzens ausdehnt.

Die Druckmutter 28 weist vorzugsweise einen zylindrischen Abschnitt 66 auf, welcher das Innengewinde 30 trägt und einen sich daran anschließenden Schlüsselflächenabschnitt 68, der einzelne Schlüsselflächen 70 aufweist und ungefähr im Bereich der Öffnung 58 der Druckmutter 28 liegt.

Auf einer dem zylindrischen Abschnitt 66 gegenüberliegenden Seite des Schlüsselflächenabschnitts 60 trägt die Druckmutter 28 einen als Ganzes mit 72 bezeichneten zylindrischen Abschnitt, der mit einem Außengewinde 74 versehen ist.

Der zylindrische Abschnitt 72 umschließt dabei eine als Ganzes mit 76 bezeichnete Aufnahme, welche sich ausgehend von einer endseitigen Öffnung 78 des zylindrischen Abschnitts 72, die auf einer dem Schlüsselabschnitt 68 gegenüberliegenden Seite des zylindrischen Abschnitts 72 liegt, in Richtung des Schlüsselflächenabschnitts 68, im Innern der Druckmutter 28 erstreckt, und zwar bis zu einem trichterförmig auf die Öffnung 58 zulaufenden und ein Einführen des Kabels 56 erleichternden Wandbereich 80.

Die Aufnahme 76 weist dabei eine ausgehend von dem Wandbereich 80 sich in Richtung der endseitigen Öffnung 78 erstreckende und koaxial zur Längsachse 42 verlaufende zylindrisch ausgebildete Wandfläche 82 auf, an welche sich unter Ausbildung einer Kante 86 eine Anlagefläche 84 anschließt, die von der Kante 86 bis zur endseitigen Öffnung 78 verläuft und sich dabei von dem Radius der zylindrischen Wandfläche 82 bis zur endseitigen Öffnung 78 konisch erweitert, vorzugsweise entsprechend einer zur Längsachse 42 koaxial verlaufenden Konusfläche.

Die endseitige Öffnung 78 stellt dabei eine Einführöffnung für ein Ende 90 eines Kabelschutzschlauchs 92 dar, welcher beispielsweise als längselastischer oder längsstauchbarer Wellenschlauch 98 aus dünnem Metall ausgebildet und mit in seiner Längsrichtung 94 mit aufeinanderfolgenden Sicken 96 versehen ist.

Das Ende 90 des Kabelschutzschlauchs 92 ist dabei mit einer mit 100 bezeichneten Endtülle versehen, welche mit einem Innenmantel 102 im Bereich des Endes 90 in den Kabelschutzschlauch 92 eingreift und Mantelsicken 106 aufweist, die ihrerseits in die Sicken 96 des Wellenschlauchs 98 eingreifen und damit den Innenmantel 102 der Endtülle 100 fixieren.

Ferner ist an den Innenmantel 102 eine zu einem Außenmantel 112 der Endtülle führende Umbiegung 108 angeformt, welche eine Endkante 110 des Endes 90 des Kabelschutzschlauchs 92 umschließt. Der Außenmantel 112 liegt auf einer Außenseite 114 des Kabelschutzschlauchs 92 im Bereich des Endes 90 an und erstreckt sich bis zu einem vorzugsweise ringförmig ausgebildeten Anlageelement 116, das konisch zum Außenmantel 112 und von dem Kabelschutzschlauch 92 radial nach außen weg verläuft. Vorzugsweise bildet das Anlageelement 116 einen konisch um den Außenmantel 112 verlaufenden Ring, welcher sich ausgehend von dem Außenmantel 112 und in Richtung von der Umbiegung 108 weg konisch erweitert.

Vorzugsweise ist das Anlageelement 116 so geformt, daß es so weit über den Außenmantel 112 in radialer Richtung übersteht, daß dieses an der Anlagefläche 84 anlegbar ist und zwar insbesondere im Bereich einer der Kante 86, mit welcher die Anlagefläche 84 in die zylindrische Wandfläche 82 übergeht.

Die Endtülle 100 ist elektrisch leitend mit dem Wellenschlauchs 98 verbunden, welcher ebenfalls in seiner Längsrichtung 94 über seine ganze Länge elektrisch leitend ist.

Durch die Ausführung der Endtülle 100 aus elektrisch leitendem Material oder Material mit einer elektrisch leitenden Oberflächenveredelung, beispielsweise einer Verzinkung, ist somit auch eine elektrische Verbindung zwischen der Endtülle 100 und der Druckmutter 28 mit dem zylindrischen Abschnitt 72, insbesondere der Anlagefläche 84 derselben herstellbar, wobei vorzugsweise durch ein Anpressen des Anlageelements 116 an die Anlagefläche 84, vorzugsweise im Bereich der Kante 86 aufgrund einer zumindest teilweise linienförmigen Berührung des Anlageelements 116 im Bereich der Kante 118 die für einen guten elektrischen Kontakt erforderliche hohe Flächenpressung erreichbar ist.

Um das Anlageelement 116 und somit auch die Endtülle 100 in der Aufnahme 76 zu fixieren und andererseits den bereits beschriebenen elektrischen Kontakt zwischen der Anlagefläche 84 und/oder der Kante 86 und dem Anlageelement 116 herzustellen, ist ein als Ganzes mit 120 bezeichnetes Klemmelement vorgesehen, welches eine Überwurfmutter 122 aufweist, die mit einem Innengewinde 124 auf das Außengewinde 74 des zylindrischen Ansatzes 72 aufschraubbar ist. Die Überwurfmutter weist ferner einen radial über das Innengewinde 124 bis zu einer Durchtrittsöffnung 125 für das Kabel 56 nach innen gezogenen Endflansch 126 auf, mit welchem ein vorzugsweise ringförmiges Druckstück 128 beaufschlagbar ist, das zwischen dem Endflansch 126 und dem Anlageelement 116 angeordnet ist.

Das Druckelement 128 weist seinerseits einen inneren Durchbruch 130 auf, welcher von dem Kabelschutzschlauch 92 durchsetzt ist und diesen auf seiner Außenseite 114 umgibt, und außerdem eine Außenfläche 132, die konisch sich verjüngend in Richtung auf ein das Anlageelement 116 beaufschlagendes Ende 134 verläuft, wobei der Konuswinkel so gewählt ist, daß das Ende 134 zwischen dem Anlageelement 116 der Endtülle 100 und der Außenseite 114 des Kabelschutzschlauchs 92 eingreift und somit einerseits die gesamte Einheit aus Endtülle 100 und Ende 90 des Kabelschutzschlauchs 92 in Richtung des Schlüsselflächenabschnitts 68 beaufschlagt und andererseits gleichzeitig das Anlageelement 116 gegen die Anlagefläche 84 und insbesondere die Kante 86 drückt, um den guten elektrischen Kontakt zwischen diesem und der Druckmutter 28 herzustellen, wobei die Druckmutter 28 im einfachsten Fall aus elektrisch leitendem Material hergestellt ist.

Vorzugsweise ist dabei das Druckelement 128 aus elastischem Material ausgebildet, so daß die Überwurfmutter 120 so weit auf die Druckmutter 128 aufschraubbar ist, bis das Druckelement 128 aufgrund des elastischen Materials die gewünschte Anpreßkraft zur Fixierung des Endes 90 des Kabelschutzschlauchs 92 mit der Endtülle 100 erzeugt.

Durch den elektrisch leitend ausgebildeten und elektrisch leitend mit dem Bauteil 16 verbundenen Stutzen 10, die elektrisch leitend ausgebildete und elektrisch leitend mit dem Stutzen 10 verbundene Druckmutter 28, die Endtülle, die die Druckmutter 28 und den Wellenschlauch 98 elektrisch leitend miteinander verbindet, sowie den über seine gesamte Erstreckung in Längsrichtung 94 elektrisch leitenden Wellenschlauch 98 ist eine umfassende elektrische Abschirmung des Kabels 56 geschaffen, in einer erfindungsgemäßen Kabelanordnung, umfassend die Kabelverschraubung, das Kabel 56 und den Kabelschutzschlauch, gegeben.

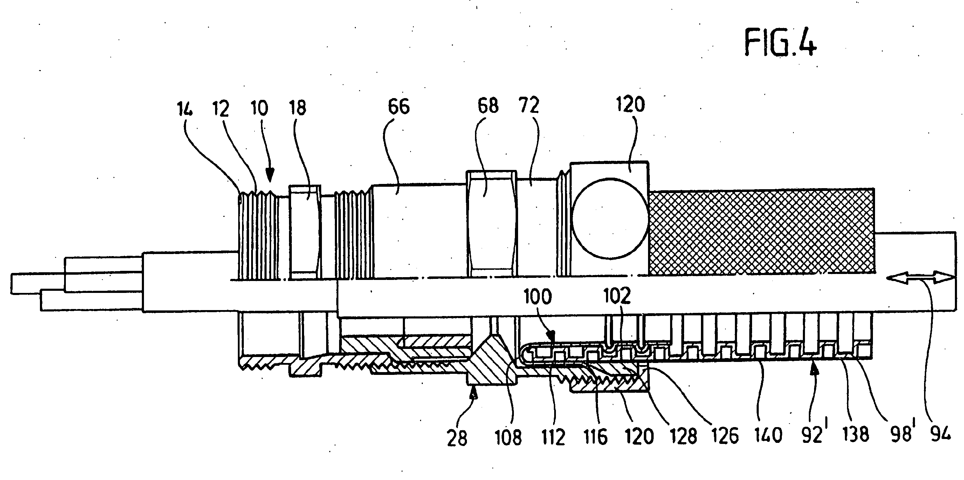

Bei einem zweiten Ausführungsbeispiel einer erfindungsgemäßen Kabelanordnung, umfassend eine Kabelverschraubung mit einem Kabel und einem Kabelschutzschlauch, dargestellt in Fig. 4, ist im Gegensatz zum ersten Ausführungsbeispiel der Kabelschutzschlauch 92 nicht aus einem Wellenschlauch 98' ausgebildet, welcher über die gesamte Längserstreckung 94 elektrisch leitend ist, sondern beispielsweise aus einem Schlauch aus nichtleitendem elektrischem Material oder einem Schlauch aus nicht elektrisch leitend miteinander verbundenen Segmenten. Aus diesem Grund umfaßt der Kabelschutzschlauch 92' auf einer Außenseite 138 des Wellenschlauchs 98' ein zusätzlich angeordnetes Metallgeflecht 140, welches über die gesamte Erstreckung des Kabelschutzschlauchs 92' in der Längsrichtung 94 verläuft und außerdem durch die Endtülle 100 zwischen dem Außenmantel 112 und der Außenseite 138 des Wellenschlauchs 98' eingeklemmt und somit elektrisch durch die Endtülle 100 kontaktiert ist, so daß wiederum ein elektrischer Kontakt zwischen dem Metallgeflecht 140 und der Endtülle 100 und somit auch dem Anlageelement 116 derselben besteht und die Kontaktierung in gleicher Weise erfolgen kann, wobei die Kabelverschraubung identisch ausgebildet ist wie beim ersten Ausführungsbeispiel.

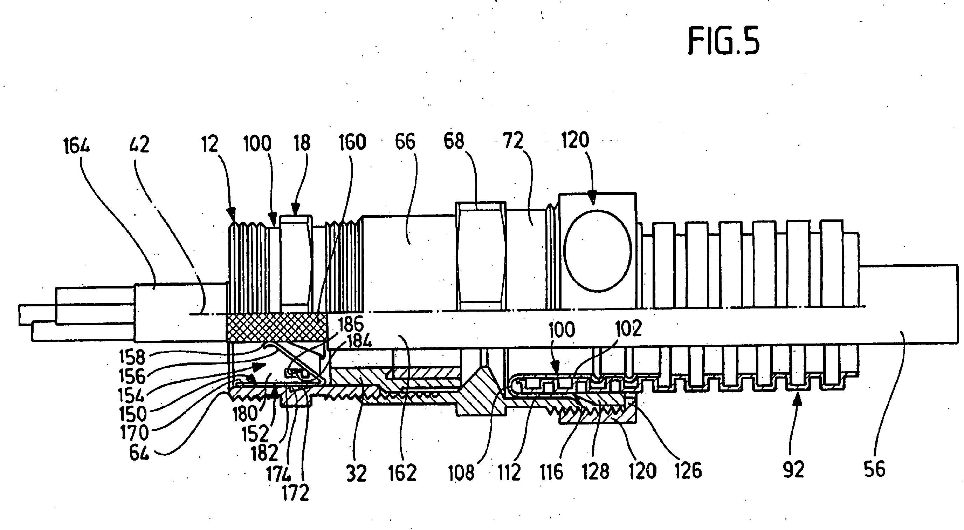

Bei einem dritten Ausführungsbeispiel, dargestellt in Fig. 5 sind diejenigen Teile, die mit denen des ersten und des zweiten Ausführungsbeispiels identisch sind, mit denselben Bezugszeichen versehen, so daß hinsichtlich deren Beschreibung auf die Ausführungen zu den vorangehenden Ausführungsbeispielen Bezug genommen werden kann.

Im Gegensatz zu den ersten Ausführungsbeispielen ist in dem zylindrischen Ansatz 12 des Stutzens 10 eine Aufnahme 150 für ein Schirmkontaktelement 152 vorgesehen, wobei dieses Schirmkontaktelement 152 ein Trägerteil 154 aufweist, von welchem Kontaktfedern 156 radial in Richtung der Längsachse 42 abstehen und eine endseitige Umbiegung 158 aufweisen, mit welcher diese einen Schirm 160 des Kabels 56 kontaktieren, welcher beim Kabel 56 von einem Außenmantel 162 überdeckt ist und einen Innenleiterbereich 164 des Kabels 56 umschließt. Der Kabelschirm 160 ist dabei vorzugsweise in Form eines Metallgeflechts ausgebildet und wird zur Kontaktierung durch das Schirmkontaktelement 152 durch Entfernung des Außenmantels 162 freigelegt.

Die Aufnahme 150 für das Schirmkontaktelement 152 begrenzt den Innenraum 62 und erstreckt sich ausgehend von der gehäuseseitigen Öffnung 64 in Form einer zur Längsachse 42 zylindrischen Fläche 170 bis zu einer Hinterschneidung 172, welche vorzugsweise im Bereich des Schlüsselflächenabschnitts 18 liegt und auf ihrer der Öffnung 64 zugewandten Seite eine ungefähr senkrecht zur Längsachse 42 verlaufende Flanschfläche 174 aufweist.

Das Trägerteil 154 weist seinerseits einen ringförmig zur die Längsachse 42 gebogenen Flachmaterialstreifen 180 auf, welcher mit einer Außenfläche 182 an der Zylinderfläche 170 anliegt und von dieser in Richtung der Längsachse 42 geführt ist. Ferner sind an dem Trägerteil 154 Rastelemente 184, beispielsweise in Form von nach außen gebogenen Krallen, vorgesehen, welche bei in die Aufnahme 150 eingesetztem Trägerteil 154 in die Hinterschneidung 172 eingreifen und mit ihren der Öffnung 64 zugewandten Enden 186 an der Flanschfläche 174 anliegen und damit das Trägerteil 154 gegen eine Bewegung in Richtung der Öffnung 64 sichern.

Vorzugsweise ist dabei das Trägerteil 154 als Ganzes durch die Öffnung 64 in den Stutzen 10 einschiebbar, wobei die Krallen 184 aufgrund ihrer Ausbildung in Form von Ausbiegungen aus dem Flachmaterial des Trägerteils 154 federnd bewegbar sind, so daß sie ungefähr fluchtend mit dem Flachmaterial des Trägerteils 154 ausrichtbar sind, um ein Einschieben des Trägerteils 154 von der Öffnung 64 her in den Stutzen 10 nicht behindern, so lange, bis die Krallen 184 die Hinterschneidung 172 erreichen, und dann aufgrund ihrer Federwirkung radial nach außen springen und in die Hinterschneidung 172 in der bereits beschriebenen Art und Weise eingreifen.

Erfindungsgemäß ist auch das Schirmkontaktelement 152 elektrisch leitend ausgebildet, so daß es eine elektrische Verbindung zwischen dem Kabelschirm 160 und dem Stutzen 10 herstellt. Hierzu ist das Trägerteil 154 als beispielsweise geschlitzter Ring mit einer in radialer Richtung zur Längsachse 42 wirkenden Spannung ausgebildet, so daß eine sichere elektrische Kontaktierung zwischen dem Trägerteil 154 und der zylindrischen Fläche 170 der Aufnahme 150 entsteht.

Ferner bewirken auch die federnd ausgebildeten Krallen 184, insbesondere mit ihren Enden 186 einen mechanischen Kontakt mit hoher punktförmiger Flächenpressung, so daß auch hierdurch eine gute elektrische Verbindung zwischen dem Stutzen 10 und dem Schirmkontaktelement 152 herstellbar ist.

Bei einem weiteren zeichnerisch nicht dargestellten Ausführungsbeispiel ist der Wellenschlauch 98 zwar aus Metall, jedoch eine helixähnlich gewendelten und dabei ineinandergreifenden Doppelsicke hergestellt und daher besonders gut in der Längsrichtung 94 stauchbar, allerdings ist dessen Abschirmwirkung begrenzt, so daß dieser vorzugsweise im Zusammenhang mit dem dritten Ausführungsbeispiel einsetzbar ist.

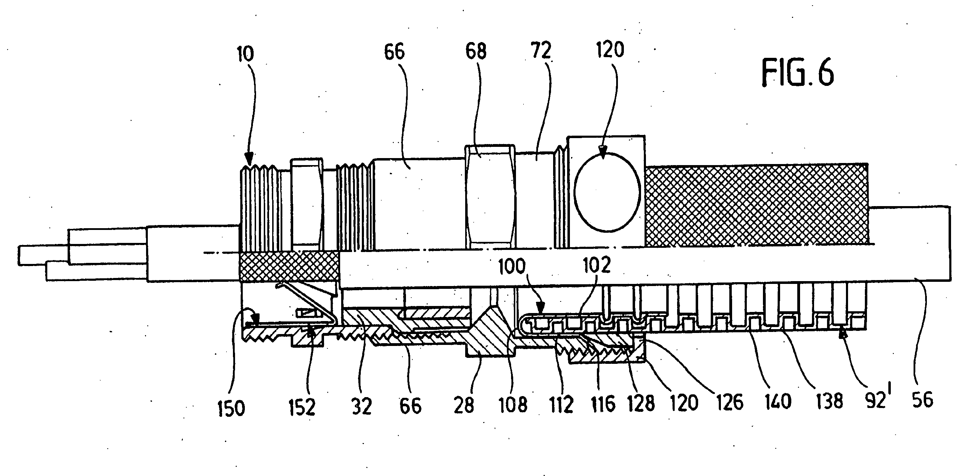

Bei einem vierten Ausführungsbeispiel, dargestellt in Fig. 6, sind diejenigen Teile, die mit denen der voranstehenden Ausführungsbeispiele identisch sind, mit denselben Bezugszeichen versehen, so daß hinsichtlich der Beschreibung derselben vollinhaltlich auf die Ausführungen zu den ersten Ausführungsbeispielen Bezug genommen werden kann.

Insbesondere ist der Kabelschutzschlauch 92' in gleicher Weise ausgebildet wie beim zweiten Ausführungsbeispiel, während der Stutzen 10 in gleicher Weise wie bei dem dritten Ausführungsbeispiel mit einem Schirmkontaktelement 152 versehen ist, das in der Aufnahme 150 des Stutzens 10 angeordnet ist.

Im übrigen sind die weiteren Teile in gleicher Weise ausgebildet wie beim ersten Ausführungsbeispiel, so daß auf die Ausführungen hierzu vollinhaltlich Bezug genommen werden kann.

## Patentansprüche

1. Kabelverschraubung, umfassend einen mit einem auf einem definierten elektrischen Potential liegenden Bauteil (16), insbesondere einem Gehäuse, zu verbindenden Stutzen (10), eine in ein Inneres des Stutzens (10) eingesetzte Dichtung (46) sowie ein mit dem Stutzen verschraubtes Druckelement (28), welches auf die Dichtung (46) im Sinne eines Anlegens derselben an einen Mantel eines durch die Kabelverschraubung hindurchgeführten Kabels (56) einwirkt,
**dadurch gekennzeichnet, dass** auf einer dem Stutzen (10) gegenüberliegenden Seite des Druckelements (28) eine Aufnahme (76) vorgesehen ist, in welche ein Ende (90) eines den Mantel des Kabels (56) umgebenden und über seine Länge elektrisch leitend ausgebildeten Kabelschutzschlauchs (92) einzusetzen ist, dass ein mit dem Druckelement (28) verbundenes Klemmelement (120) zum mechanisch und elektrisch leitenden Verbinden des Endes (90) des Kabelschutzschlauchs (92) mit dem Druckelement (28) vorgesehen ist und dass das Druckelement (28) mit dem Stutzen (10) und der Stutzen (10) mit dem Bauteil (16) elektrisch leitend verbunden sind.

2. Kabelverschraubung nach Anspruch 1, **dadurch gekennzeichnet, daß** die Aufnahme (76) als Aufnahme für eine Endtülle (100) des Kabelschutzschlauches (92) ausgebildet ist.

3. Kabelverschraubung nach Anspruch 2, **dadurch gekennzeichnet, daß** die Aufnahme (76) eine sich in radialer Richtung zu einer Längsachse (42) der Kabelverschraubung erstreckende Anlagefläche (84) für ein Anlageelement (116) der Endtülle (100) aufweist.

4. Kabelverschraubung nach Anspruch 3, **dadurch gekennzeichnet, daß** die Anlagefläche (84) sich in Richtung einer Einführöffnung (78) der Aufnahme (76) konisch erweitert.

5. Kabelverschraubung nach einem der Ansprüche 2 bis 4, **dadurch gekennzeichnet, daß** die elektrisch leitende Verbindung zwischen dem Kabelschutzschlauch (92) und dem Druckelement (28) über einen elektrischen Kontakt zwischen der Endtülle (100) und dem Druckelement (28) erfolgt.

6. Kabelverschraubung nach einem der Ansprüche 2 bis 5, **dadurch gekennzeichnet, daß** die elektrische Verbindung zwischen der Endtülle (100) und dem Druckelement (28) über eine im wesentlichen linienförmige Anlage (86) der beiden aneinander erfolgt.

7. Kabelverschraubung nach Anspruch 6, **dadurch gekennzeichnet, daß** die Endtülle (100) an einer Kante (86) der Aufnahme (76) anlegbar ist.

8. Kabelverschraubung nach Anspruch 7, **dadurch gekennzeichnet, daß** die elektrisch leitende Verbindung zwischen der Endtülle (100) und dem Druckelement (28) über das an der Kante (86) auf einer Seite der Anlagefläche (84) anliegenden Anlageelement (116) erfolgt.

9. Kabelverschraubung nach einem der voranstehenden Ansprüche, **dadurch gekennzeichnet, daß** das Klemmelement (120) eine Überwurfmutter (122) umfaßt, welche auf das Druckelement (28) aufschraubbar ist.

10. Kabelverschraubung nach Anspruch 9, **dadurch gekennzeichnet, daß** das Klemmelement (120) einen Druckteil (128) umfaßt, welcher auf das Anlageelement (116) der Endtülle (100) wirkt.

11. Kabelverschraubung nach Anspruch 10, **dadurch gekennzeichnet, daß** das Druckteil (128) elastisch ausgebildet ist.

12. Kabelverschraubung nach Anspruch 10 oder 11, **dadurch gekennzeichnet, daß** das Druckteil(128) mit einem Druckkeil zwischen einer Außenseite des Kabelschutzschlauchs (92) und dem Anlageelement (116) der Endtülle eingreift.

13. Kabelverschraubung nach einem der voranstehenden Ansprüche, **dadurch gekennzeichnet, daß** in dem Stutzen ein Schirmkontaktelement (152) angeordnet ist, welches in elektrischem Kontakt mit dem Stutzen (10) steht und mittels mindestens eines in Richtung des durchgeführten Kabels (56) reichenden Kontaktbügels (156) einen einen Innenleiterbereich (164) des Kabels (56) umschließenden, freigelegten Kabelschirm (160) kontaktiert.

14. Kabelverschraubung nach Anspruch 13, **dadurch gekennzeichnet, daß** der Kontaktbügel (156) in einer ungefähr parallel zur Längsachse (42) der Kabelverschraubung verlaufenden Ebene federnd bewegbar ist.

15. Kabelverschraubung nach Anspruch 13 oder 14, **dadurch gekennzeichnet, daß** das Schirmkontaktelement (152) mehrere Kontaktbügel (156) aufweist.

16. Kabelverschraubung nach einem der Ansprüche 13 bis 15, **dadurch gekennzeichnet, daß** das Schirmkontaktelement (152) ein Trägerteil (154) aufweist, an welchem die Kontaktbügel (156) gehalten sind.

17. Kabelverschraubung nach einem der Ansprüche 13 bis 16, **dadurch gekennzeichnet, daß** das Schirmkontaktelement (152) in einer Aufnahme (150) des Stutzens (10) sitzt.

18. Kabelverschraubung nach einem der Ansprüche 14 bis 17, **dadurch gekennzeichnet, daß** das Trägerteil (154) relativ zum Stutzen (10) fixiert angeordnet ist.

19. Kabelverschraubung nach Anspruch 17 oder 18, **dadurch gekennzeichnet, daß** das Trägerteil (154) mit einer Außenfläche in Richtung der Längsachse (14) der Kabelverschraubung in der Aufnahme (150) geführt ist.

20. Kabelverschraubung nach einem der Ansprüche 13 bis 19, **dadurch gekennzeichnet, daß** das Schirmkontaktelement (152) mittels Rastelementen (172, 184) in Richtung der Längsachse (42) fixiert ist.

21. Kabelverschraubung nach einem der Ansprüche 14 bis 20, **dadurch gekennzeichnet, daß** das Schirmkontaktelement (152) von einer dem Druckelement (28) gegenüberliegenden. Seite des Stutzens (10) in die Aufnahme (150) einschiebbar ist.

22. Kabelverschraubung nach Anspruch 21, **dadurch gekennzeichnet, daß** sich die Aufnahme (150) an eine dem Druckelement (28) gegenüberliegende Öffnung (64) des Stutzens (10) abschließt.

23. Kabelanordnung umfassend eine Kabelverschraubung und ein in dieser gehaltenes Kabel, **dadurch gekennzeichnet, daß** die Kabelanordnung mit einem Kabelschutzschlauch (92) versehen ist und daß die Kabelverschraubung nach einem der Ansprüche 1 bis 22 ausgebildet ist.

24. Kabelanordnung nach Anspruch 23, **dadurch gekennzeichnet, daß** der Kabelschutzschlauch (92) in seiner Längenausdehnung variabel ist.

25. Kabelanordnung nach Anspruch 23 oder 24, **dadurch gekennzeichnet, daß** der Kabelschutzschlauch (92) ein in dessen Längsrichtung (94) elektrisch leitendes Element (98, 138) aufweist.

26. Kabelanordnung nach Anspruch 23 oder 24, **dadurch gekennzeichnet, daß** der Kabelschutzschlauch (92) ein nur in einer Spiralrichtung elektrisch leitendes Element aufweist.

27. Kabelanordnung nach einem der Ansprüche 23 bis 26, **dadurch gekennzeichnet, daß** das eine Ende (90) des Kabelschutzschlauchs (92) mit einer Endtülle (100) versehen ist.

28. Kabelanordnung nach Anspruch 27, **dadurch gekennzeichnet, daß** die Endtülle (100) einen Innenmantel (102) für den Kabelschutzschlauch (92) aufweist.

29. Kabelanordnung nach Anspruch 27 oder 28, **dadurch gekennzeichnet, daß** die Endtülle (100) einen Außenmantel (112) für den Kabelschutzschlauch (92) aufweist.

30. Kabelanordnung nach einem der Ansprüche 27 bis 29, **dadurch gekennzeichnet, daß** die Endtülle (100) ein sich vom Kabelschutzschlauch (92) aus nach außen erstreckendes Anlageelement (116) aufweist.

## Claims

1. Screwed cable gland, comprising a gland (10) that is to be connected to a component (16), in particular a housing, lying at a defined electric potential, a seal (46) that is inserted into an interior of the gland (10), and a pressure element (28) that is screw-connected to the gland and acts upon the seal (46) in the sense of applying the seal against a sheath of a cable (56) run through the screwed cable gland, **characterized in that** at an opposite side of the pressure element (28) to the gland (10) a receiver (76) is provided, into which there is to be inserted one end (90) of a cable protection tube (92), which is designed to be electrically conductive over its length and surrounds the sheath of the cable (56), that a clamp element (120) connected to the pressure element (28) is provided for the mechanical and electrically conductive connection of the end (90) of the cable protection tube (92) to the pressure element (28) and that the pressure element (28) is connected electrically conductively to the gland (10) and the gland (10) is connected electrically conductively to the component (16).

2. Screwed cable gland according to claim 1, **characterized in that** the receiver (76) is designed as a receiver for a terminal sleeve (100) of the cable protection tube (92).

3. Screwed cable gland according to claim 2, **characterized in that**, for a seating element (116) of the terminal sleeve (100), the receiver (76) has a seating surface (84) extending in radial direction relative to a longitudinal axis (42) of the screwed cable gland.

4. Screwed cable gland according to claim 3, **characterized in that** the seating surface (84) widens conically in the direction of a lead-in opening (78) of the receiver (76).

5. Screwed cable gland according to one of claims 2 to 4, **characterized in that** the electrically conductive connection between the cable protection tube (92) and the pressure element (28) is effected by means of an electrical contact between the terminal sleeve (100) and the pressure element (28).

6. Screwed cable gland according to one of claims 2 to 5, **characterized in that** the electrical connection between the terminal sleeve (100) and the pressure element (28) is effected by means of a substantially line contact (86) of the two components with one another.

7. Screwed cable gland according to claim 6, **characterized in that** the terminal sleeve (100) is positionable against an edge (86) of the receiver.

8. Screwed cable gland according to claim 7, **characterized in that** the electrically conductive connection between the terminal sleeve (100) and the pressure element (28) is effected by the seating element (116) being seated on the edge (86) at one side of the seating surface (84).

9. Screwed cable gland according to one of the preceding claims, **characterized in that** the clamp element (120) comprises a retaining nut (122) that may be screwed onto the pressure element (28).

10. Screwed cable gland according to claim 9, **characterized in that** the clamp element (120) has a pressure part (128), which acts upon the seating element (116) of the terminal sleeve (100).

11. Screwed cable gland according to claim 10, **characterized in that** the pressure part (128) is of a resilient design.

12. Screwed cable gland according to claim 10 or 11, **characterized in that** the pressure part (128) engages with a pressure wedge between an outer side of the cable protection tube (92) and the seating element (116) of the terminal sleeve.

13. Screwed cable gland according to one of the preceding claims, **characterized in that** disposed in the gland is a shield contact element (152), which is in electrical contact with the gland (10) and by means of at least one contact bow (156), which extends in the direction of the cable (56) running through, contacts an exposed cable shield (160) that surrounds an inner conductor region (164) of the cable (56).

14. Screwed cable gland according to claim 13, **characterized in that** the contact bow (156) is resiliently movable in a plane extending approximately parallel to the longitudinal axis (42) of the screwed cable gland.

15. Screwed cable gland according to claim 13 or 14, **characterized in that** the shield contact element (152) comprises a plurality of contact bows (156).

16. Screwed cable gland according to one of claims 13 to 15, **characterized in that** the shield contact element (152) comprises a carrier part (154), on which the contact bows (156) are held.

17. Screwed cable gland according to one of claims 13 to 16, **characterized in that** the shield contact element (152) is seated in a receiver (150) of the gland (10).

18. Screwed cable gland according to one of claims 14 to 17, **characterized in that** the carrier part (154) is disposed in a fixed manner relative to the gland (10).

19. Screwed cable gland according to claim 17 or 18, **characterized in that** the carrier part (154) extends with an outer surface in the direction of the longitudinal axis (14) of the screwed cable gland in the receiver (150).

20. Screwed cable gland according to one of claims 13 to 19, **characterized in that** the shield contact element (152) is fixed in the direction of the longitudinal axis (42) by means of detent elements (172, 184).

21. Screwed cable gland according to one of claims 14 to 20, **characterized in that** the shield contact element (152) is insertable into the receiver (150) from an end of the gland (10) remote from the pressure element (28).

22. Screwed cable gland according to claim 21, **characterized in that** the receiver (150) adjoins an opening (64) of the gland (10) remote from the pressure element (28).

23. Cable arrangement comprising a screwed cable gland and a cable held therein, **characterized in that** the cable arrangement is provided with a cable protection tube (92) and that the screwed cable gland is designed in accordance with one of claims 1 to 22.

24. Cable arrangement according to claim 23, **characterized in that** the cable protection tube (92) is variable in terms of its longitudinal extent.

25. Cable arrangement according to claim 23 or 24, **characterized in that** the cable protection tube (92) has an element (98, 138) that is electrically conductive in longitudinal direction (94) thereof.

26. Cable arrangement according to claim 23 or 24, **characterized in that** the cable protection tube (92) has an element that is electrically conductive only in a spiral direction.

27. Cable arrangement according to one of claims 23 to 26, **characterized in that** the one end (90) of the cable protection tube (92) is provided with a terminal sleeve (100).

28. Cable arrangement according to claim 27, **characterized in that** the terminal sleeve (100) comprises an inner sheath (102) for the cable protection tube (92).

29. Cable arrangement according to claim 27 or 28, **characterized in that** the terminal sleeve (100) comprises an outer sheath (112) for the cable protection tube (92).

30. Cable arrangement according to one of claims 27 to 29, **characterized in that** the terminal sleeve (100) comprises a seating element (116), which extends outwards from the cable protection tube (92).

## Revendications

1. Passe-câble à vis comprenant une tubulure (10) à raccorder à un composant (16) se trouvant sur un potentiel électrique défini, en particulier à un boîtier, comprenant un joint d'étanchéité (46) introduit dans une partie intérieure de la tubulure (10) ainsi qu'un élément de pression (28) vissé avec la tubulure, élément de pression qui agit sur le joint d'étanchéité (46), dans le sens d'une application de ce même joint d'étanchéité sur la gaine d'un câble (56) passé à travers le passe-câble à vis, **caractérisé en ce qu'**il est prévu, sur un côté de l'élément de pression (28), placé à l'opposé de la tubulure (10), un logement (76) dans lequel doit être introduite une extrémité (90) d'un tube flexible de protection de câble (92) entourant la gaine du câble (56) et configuré, sur sa longueur, en étant électroconducteur, **en ce qu'**il est prévu un élément de serrage (120) raccordé à l'élément de pression (28), pour la jonction de l'extrémité (90) du tube flexible de protection de câble (92), avec l'élément de pression (28), réalisée de manière mécanique et électroconductrice, et **en ce que** l'élément de pression (28) et la tubulure (10) sont connectés de manière électroconductrice, l'élément de pression avec la tubulure (10), et la tubulure avec le composant (16).

2. Passe-câble à vis selon la revendication 1,
**caractérisé en ce que** le logement (76) est configuré comme un logement pour une douille de fin (100) du tube flexible de protection de câble (92).

3. Passe-câble à vis selon la revendication 2, **caractérisé en ce que** le logement (76) présente une surface d'appui (84) pour un élément d'appui (116) de la douille de fin (100), ladite surface d'appui s'étendant en direction radiale par rapport à un axe longitudinal (42) du passe-câble à vis.

4. Passe-câble à vis selon la revendication 3, **caractérisé en ce que** la surface d'appui (84) s'élargit coniquement en direction d'une ouverture d'introduction (78) du logement (76).

5. Passe-câble à vis selon l'une quelconque des revendications 2 à 4, **caractérisé en ce que** la connexion électroconductrice, entre le tube flexible de protection de câble (92) et l'élément de pression (28), est réalisée par un contact électrique entre la douille de fin (100) et l'élément de pression (28).

6. Passe-câble à vis selon l'une quelconque des revendications 2 à 5, **caractérisé en ce que** la connexion électrique entre la douille de fin (100) et l'élément de pression (28) est réalisée par un appui (86), pratiquement en forme de ligne, des deux éléments l'un contre l'autre.

7. Passe-câble à vis selon la revendication 6, **caractérisé en ce que** la douille de fin (100) peut venir en appui sur un bord (86) du logement (76).

8. Passe-câble à vis selon la revendication 7, **caractérisé en ce que** la connexion électroconductrice entre la douille de fin (100) et l'élément de pression (28) est réalisée par l'élément d'appui (116) s'appliquant, au niveau du bord (86), sur un côté de la surface d'appui (84).

9. Passe-câble à vis selon l'une quelconque des revendications précédentes, **caractérisé en ce que** l'élément de serrage (120) comprend un écrou de raccord (122) qui peut être vissé sur l'élément de pression (28).

10. Passe-câble à vis selon la revendication 9, **caractérisé en ce que** l'élément de serrage (120) comprend une pièce de pression (128) qui agit sur l'élément d'appui (116) de la douille de fin (100).

11. Passe-câble à vis selon la revendication 10, **caractérisé en ce que** la pièce de pression (128) est configurée élastiquement.

12. Passe-câble à vis selon la revendication 10 ou 11, **caractérisé en ce que** la pièce de pression (128) s'engage, par une clavette de pression, entre un côté extérieur du tube flexible de protection de câble (92) et l'élément d'appui (116) de la douille de fin.

13. Passe-câble à vis selon l'une quelconque des revendications précédentes, **caractérisé en ce que** dans la tubulure est disposé un élément de contact de blindage (152) qui est en contact électrique avec la tubulure (10) et, au moyen au moins d'un étrier de contact (156) s'étendant en direction du câble (56) ayant été passé, vient au contact d'un blindage de câble dénudé (160) entourant une zone de conducteur intérieur (164) du câble (56).

14. Passe-câble à vis selon la revendication 13 **caractérisé en ce que** l'étrier de contact (156) est mobile élastiquement dans un plan s'étendant à peu près parallèlement à l'axe longitudinal (42) du passe-câble à vis.

15. Passe-câble à vis selon la revendication 13 ou 14, **caractérisé en ce que** l'élément de contact de blindage (152) présente plusieurs étriers de contact (156).

16. Passe-câble à vis selon l'une quelconque des revendications 13 à 15, **caractérisé en ce que** l'élément de contact de blindage (152) présente une partie support (154) sur laquelle sont tenus les étriers de contact (156).

17. Passe-câble à vis selon l'une quelconque des revendications 13 à 16, **caractérisé en ce que** l'élément de contact de blindage (152) est placé dans un logement (150) de la tubulure (10).

18. Passe-câble à vis selon l'une quelconque des revendications 14 à 17, **caractérisé en ce que** la partie support (154) est disposée en étant fixée par rapport à la tubulure (10).

19. Passe-câble à vis selon la revendication 17 ou 18, **caractérisé en ce que** la partie support (154) est guidée dans le logement (150), par une surface extérieure, suivant la direction de l'axe longitudinal (14) du passe-câble à vis.

20. Passe-câble à vis selon l'une quelconque des revendications 13 à 19, **caractérisé en ce que** l'élément de contact de blindage (152) est fixé au moyen d'éléments à crans d'arrêt (172, 184), suivant la direction de l'axe longitudinal (42).

21. Passe-câble à vis selon l'une quelconque des revendications 14 à 20, **caractérisé en ce que** l'élément de contact de blindage (152) peut être poussé dans le logement (150) à partir d'un côté de la tubulure (10), placé à l'opposé de l'élément de pression (28).

22. Passe-câble à vis selon la revendication 21, **caractérisé en ce que** le logement (150) se raccorde à une ouverture (64) de la tubulure (10), placée à l'opposé de l'élément de pression (28).

23. Agencement de câble comprenant un passe-câble à vis et un câble tenu dans celui-ci, **caractérisé en ce que** l'agencement de câble est doté d'un tube flexible de protection de câble (92), et **en ce que** le passe-câble à vis est configuré selon l'une quelconque des revendications 1 à 22.

24. Agencement de câble selon la revendication 23, **caractérisé en ce que** le tube flexible de protection de câble (92) est variable dans sa dimension longitudinale.

25. Agencement de câble selon la revendication 23 ou 24, **caractérisé en ce que** le tube flexible de protection de câble (92) présente un élément (98, 138) électroconducteur dans sa direction longitudinale (94).

26. Agencement de câble selon la revendication 23 ou 24, **caractérisé en ce que** le tube flexible de protection de câble (92) présente un élément électroconducteur seulement dans une direction en spirale.

27. Agencement de câble selon l'une quelconque des revendications 23 à 26, **caractérisé en ce que** l'une des extrémités (90) du tube flexible de protection de câble (92) est dotée d'une douille de fin (100).

28. Agencement de câble selon la revendication 27, **caractérisé en ce que** la douille de fin (100) présente une gaine intérieure (102) pour le tube flexible de protection de câble (92).

29. Agencement de câble selon la revendication 27 ou 28, **caractérisé en ce que** la douille de fin (100) présente une gaine extérieure (112) pour le tube flexible de protection de câble (92).

30. Agencement de câble selon l'une quelconque des revendications 27 à 29, **caractérisé en ce que** la douille de fin (100) présente un élément d'appui (116) s'étendant vers l'extérieur, à partir du tube flexible de protection de câble (92).
